(19) Europäisches Patentamt
European Patent Office
Office européen des brevets

(11) **EP 4 105 754 A1**

(12) **EUROPEAN PATENT APPLICATION**

(43) Date of publication:
**21.12.2022 Bulletin 2022/51**

(21) Application number: **22174761.1**

(22) Date of filing: **23.05.2022**

(51) International Patent Classification (IPC):
**G05D 1/02** *(2020.01)*

(52) Cooperative Patent Classification (CPC):
**G05D 1/024; A01B 69/00; G01S 17/00;
G05D 1/0274;** G05D 2201/0201

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.05.2021 JP 2021091522**

(71) Applicant: **Yanmar Holdings Co., Ltd.
Osaka-shi, Osaka (JP)**

(72) Inventor: **SUZUKI, Akihiro
Osaka (JP)**

(74) Representative: **Novagraaf International SA
Chemin de l'Echo 3
1213 Onex, Geneva (CH)**

(54) **AUTOMATIC TRAVELING METHOD, AUTOMATIC TRAVELING SYSTEM, AND AUTOMATIC TRAVELING PROGRAM**

(57)    [Problem] To provide an automatic traveling method, an automatic traveling system, and an automatic traveling program, by which it is possible to increase the determination accuracy of an obstacle to improve the work efficiency of a work vehicle.

[Solution] The automatic traveling method includes causing a work vehicle 10 to automatically travel according to a target route R previously set in a farm field F, detecting a detection target in the farm field F by a detection unit provided in the work vehicle 10, acquiring a first coordinate position representing a position of the detection target in a sensor coordinate system having the detection unit as a reference, converting the first coordinate position into a second coordinate position representing a position of the detection target in an NED coordinate system having the farm field F as a reference, and determining whether the detection target is an obstacle, based on the second coordinate position.

FIG. 14

EP 4 105 754 A1

**Description**

TECHNICAL FIELD

The present invention relates to an automatic traveling method, an automatic traveling system, and an automatic traveling program, for causing a work vehicle to automatically travel according to a target route in a travel region.

BACKGROUND ART

There is known a work vehicle automatically traveling on a target route while spraying a chemical liquid on crops planted in a work area such as a farm field or an agricultural farm (see, for example, Patent Document 1). The work vehicle performs a spraying work for spraying a spraying material on a first crop row and a second crop row in each of left and right directions of the first crop row while traveling across the first crop row, for example.

PRIOR ART DOCUMENT

PATENT DOCUMENT

Patent Document 1: Japanese Unexamined Patent Application Publication No. 2021-000021

SUMMARY OF INVENTION

TECHNICAL PROBLEM

For example, if the work vehicle travels in a region where crops are arranged, while a signal (a GNSS signal, for example) received from a satellite is utilized to position the work vehicle, the work vehicle travels along a crop row route set in accordance with positions of the crops. Here, for example, when the work vehicle automatically travels along the crop row route, if the posture of the work vehicle changes and a position deviation and an orientation deviation with respect to the crop row route increase, the work vehicle may detect the crops of the crop row route, crops adjacent to the crop row route, and the like a predetermined number of times, and thus, determine the crops to be an obstacle. In this case, the work vehicle executes a travel restriction process such as travel at a reduced speed or stop traveling to avoid a collision with the obstacle. As described above, in the conventional technique, erroneous recognition of an obstacle leads to the problem that the work efficiency of the work vehicle deteriorates.
An object of the present invention relates to an automatic traveling method, an automatic traveling system, and an automatic traveling program, by which it is possible to increase the determination accuracy of an obstacle to improve the work efficiency of a work vehicle.

SOLUTION TO PROBLEM

The automatic traveling method according to the present invention includes causing a work vehicle to automatically travel according to a target route previously set in a travel region, detecting a detection target in the travel region by a detection unit provided in the work vehicle, acquiring a first coordinate position representing a position of the detection target in a first coordinate system having the detection unit as a reference, converting the first coordinate position into a second coordinate position representing a position of the detection target in a second coordinate system having the travel region as a reference, and determining whether the detection target is an obstacle, based on the second coordinate position.
An automatic traveling system according to the present invention includes a travel processing unit, a detection processing unit, an acquisition processing unit, a conversion processing unit, and a determination processing unit. The travel processing unit causes a work vehicle to automatically travel according to a target route previously set in a travel region. The detection processing unit detects a detection target in the travel region by a detection unit provided in the work vehicle. The acquisition processing unit acquires a first coordinate position representing a position of the detection target in a first coordinate system having the detection unit as a reference. The conversion processing unit converts the first coordinate position into a second coordinate position representing a position of the detection target in a second coordinate system having the travel region as a reference. The determination processing unit determines whether the detection target is an obstacle, based on the second coordinate position.
An automatic traveling program according to the present invention is a program for causing one or more processors to execute causing a work vehicle to automatically travel according to a target route previously set in a travel region, detecting a detection target in the travel region by a detection unit provided in the work vehicle, acquiring a first coordinate position representing a position of the detection target in a first coordinate system having the detection unit as a reference, converting the first coordinate position into a second coordinate position representing a position of the detection target in a second coordinate system having the travel region as a reference, and determining whether the detection target is an obstacle, based on the second coordinate position.

ADVANTAGEOUS EFFECTS OF INVENTION

According to the present invention, it is possible to provide an automatic traveling method, an automatic traveling system, and an automatic traveling program, by which it is possible to increase the determination accuracy of an obstacle to improve the work efficiency of a work vehicle.

BRIEF DESCRIPTION OF DRAWINGS

FIG. 1 is a schematic diagram illustrating an entire configuration of an automatic traveling system according to an embodiment of the present invention.
FIG. 2 is a block diagram illustrating a configuration of the automatic traveling system according to the embodiment of the present invention.
FIG. 3 is an external view obtained when a work vehicle according to the embodiment of the present invention is viewed from a left front side.
FIG. 4A is an external view of a left side face obtained when the work vehicle according to the embodiment of the present invention is viewed from a left side.
FIG. 4B is an external view of a right side face obtained when the work vehicle according to the embodiment of the present invention is viewed from a right side.
FIG. 4C is an external view of a rear face obtained when the work vehicle according to the embodiment of the present invention is viewed from a rear face side.
FIG. 5 is a diagram illustrating an example of a crop row according to the embodiment of the present invention.
FIG. 6 is a diagram illustrating an example of a target route according to the embodiment of the present invention.
FIG. 7 is a diagram for explaining an outline of a traveling method of a crop row route travel mode according to the embodiment of the present invention.
FIG. 8A is a diagram illustrating an example of a sensor coordinate system using a LiDAR sensor according to the embodiment of the present invention as a reference.
FIG. 8B is a diagram illustrating an example of a sensor coordinate system using an ultrasonic sensor according to the embodiment of the present invention as a reference.
FIG. 8C is a diagram illustrating an example of a sensor coordinate system using a work vehicle according to the embodiment of the present invention as a reference.
FIG. 8D is a diagram illustrating an example of an NED coordinate system according to the embodiment of the present invention.
FIG. 9 is a diagram illustrating an example of an obstacle map according to the embodiment of the present invention.
FIG. 10 is a diagram illustrating an example of an averaging process according to the embodiment of the present invention.
FIG. 11 is a diagram illustrating an example of an obstacle determination region according to the embodiment of the present invention.
FIG. 12A is a diagram illustrating an example of the obstacle determination region according to the embodiment of the present invention.
FIG. 12B is a diagram illustrating an example of the obstacle determination region according to the embodiment of the present invention.
FIG. 12C is a diagram illustrating an example of the obstacle determination region according to the embodiment of the present invention.
FIG. 12D is a diagram illustrating an example of the obstacle determination region according to the embodiment of the present invention.
FIG. 12E is a diagram illustrating an example of the obstacle determination region according to the embodiment of the present invention.
FIG. 13 A is a diagram for explaining a method of generating the target route according to the embodiment of the present invention.
FIG. 13B is a diagram for explaining the method of generating the target route according to the embodiment of the present invention.

FIG. 14 is a flowchart illustrating an example of a procedure of an automatic traveling process executed by the automatic traveling system according to the embodiment of the present invention.

DESCRIPTION OF EMBODIMENTS

The following embodiment is an example in which the present invention is embodied, and does not limit the technical scope of the present invention.

[Automatic Traveling System 1]

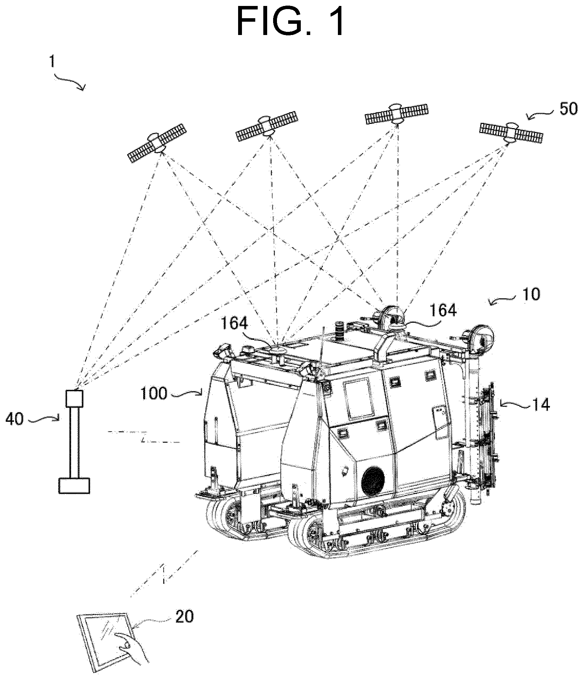

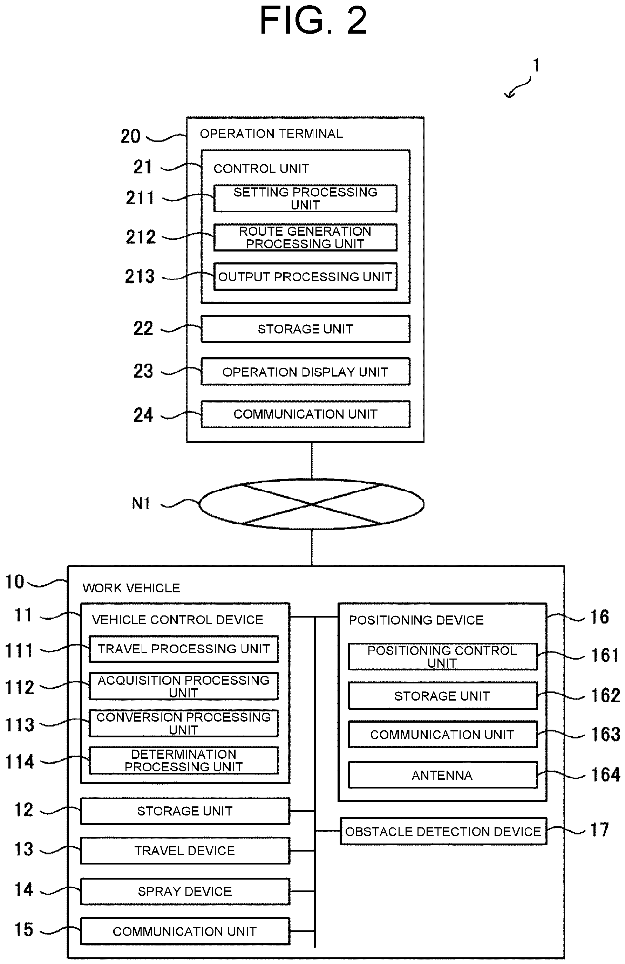

As illustrated in FIGS. 1 and 2, an automatic traveling system 1 according to the embodiment of the present invention includes a work vehicle 10, an operation terminal 20, a base station 40, and a satellite 50. The work vehicle 10 and the operation terminal 20 can communicate with each other via a communication network N1. For example, the work vehicle 10 and the operation terminal 20 can communicate via a mobile phone line network, a packet line network, or a wireless LAN.

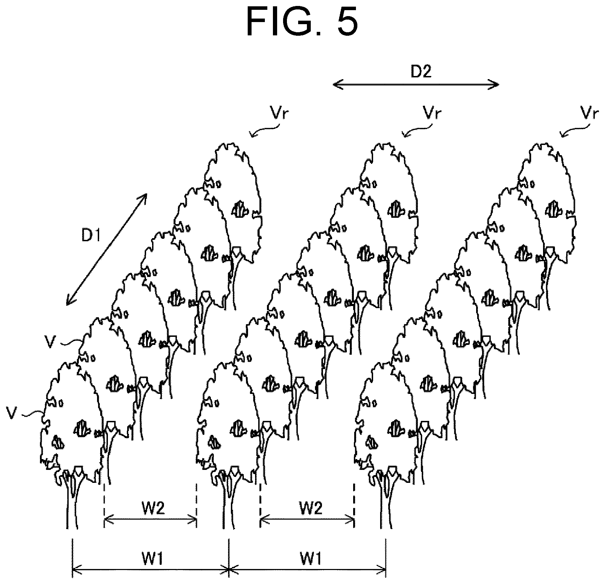

In the present embodiment, a case where the work vehicle 10 is a vehicle for performing a spraying work for spraying a chemical liquid, water, or the like on crops V (see FIG. 5) planted in a farm field F will be described as an example. The farm field F is an example of a travel region in the present invention, and the farm field F is, for example, an orchard such as a vineyard or an apple orchard. The crops V are, for example, grape trees. The spraying work is, for example, a work for spraying a spraying material such as a chemical liquid or water on the crops V. In another embodiment, the work vehicle 10 may be a vehicle for performing a weeding work, a vehicle for performing a leaf cutting work, or a vehicle for performing a harvesting work.

The crops V are arranged in a plurality of rows at predetermined intervals in the farm field F. Specifically, as illustrated in FIG. 5, a plurality of the crops V are planted linearly in a predetermined direction (a direction D1), and form a crop row Vr including the plurality of crops V arranged linearly. FIG. 5 illustrates three of the crop rows Vr. The crop rows Vr are arranged in a row direction (a direction D2) at predetermined intervals W1. A region (space) of an interval W2 between adjacent ones of the crop rows Vr is a work passage where the work vehicle 10 performs a spraying work on the crops V while traveling in the direction D1.

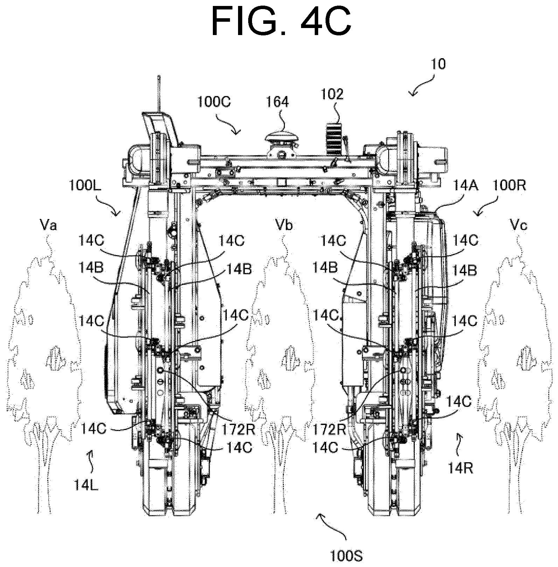

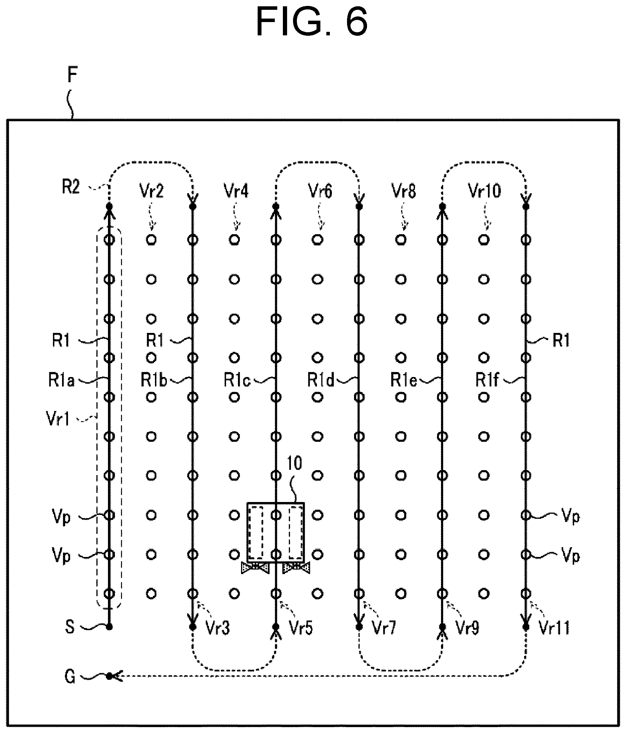

The work vehicle 10 is capable of traveling automatically (autonomously traveling) along a target route R set in advance. For example, as illustrated in FIG. 6, the work vehicle 10 automatically travels from a work start position S to a work end position G along the target route R including a work route R1 (work routes R1a to R1f) and a movement route R2. The work route R1 is a linear route on which the work vehicle 10 performs the spraying work on the crops V, and the movement route R2 is a route on which the work vehicle 10 moves between the crop rows Vr without performing the spraying work. The movement route R2 includes, for example, a turning route and a straight route. In the example illustrated in FIG. 6, the crops V forming crop rows Vr1 to Vr11 are arranged in the farm field F. In FIG. 6, positions (crop positions) where the crops V are planted are represented by "Vp". The work vehicle 10 traveling in the farm field F of FIG. 6 includes a vehicle body 100 having an inverted U-shape (see FIG. 4C), and while traveling in a state of spanning over one of the crop rows Vr, the work vehicle 10 sprays a chemical liquid on the crops V in the one crop row Vr and on the crop row Vr adjacent to the one crop row Vr. For example, as illustrated in FIG. 6, if the work vehicle 10 travels in a state of spanning over the crop row Vr5, a left-side vehicle body (a left-side part 100L) of the work vehicle 10 travels on a work passage between the crop rows Vr4 and Vr5, a right-side vehicle body (a right-side part 100R) of the work vehicle 10 travels on a work passage between the crop rows Vr5 and Vr6, and the work vehicle 10 sprays a chemical liquid on the crops V of the crop rows Vr4, Vr5, and Vr6.

The work vehicle 10 automatically travels in a predetermined row order. For example, the work vehicle 10 firstly travels across the crop row Vr1, next, travels across the crop row Vr3, and next, travels across the crop row Vr5. Thus, the work vehicle 10 automatically travels according to a preset order of the crop rows Vr. The work vehicle 10 may travel on each row in the order of arrangement of the crop rows Vr, or may travel in each of plurality of rows.

The satellite 50 is a positioning satellite configuring a satellite positioning system such as a global navigation satellite system (GNSS), and transmits a GNSS signal (satellite signal). The base station 40 is a reference point (reference station) configuring the satellite positioning system. The base station 40 transmits, to the work vehicle 10, correction information for calculating a current position of the work vehicle 10.

A positioning device 16 mounted in the work vehicle 10 executes a positioning process for calculating a current position (a latitude, a longitude, and an altitude), a current orientation, and the like of the work vehicle 10 by utilizing the GNSS signal transmitted from the satellite 50. Specifically, the positioning device 16 positions the work vehicle 10 by utilizing a real time kinetic (RTK) method or the like for positioning the work vehicle 10, based on positioning information (such as a GNSS signal) received by two receivers (an antenna 164 and the base station 40) and correction information generated by the base station 40. The positioning method is a well-known technique, and thus, detailed description thereof will be omitted.

Each constituent components configuring the automatic traveling system 1 will be described in detail below.

[Work Vehicle 10]

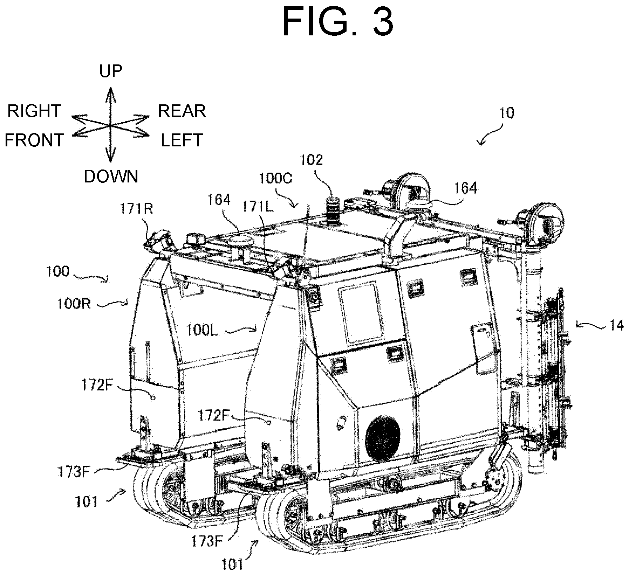

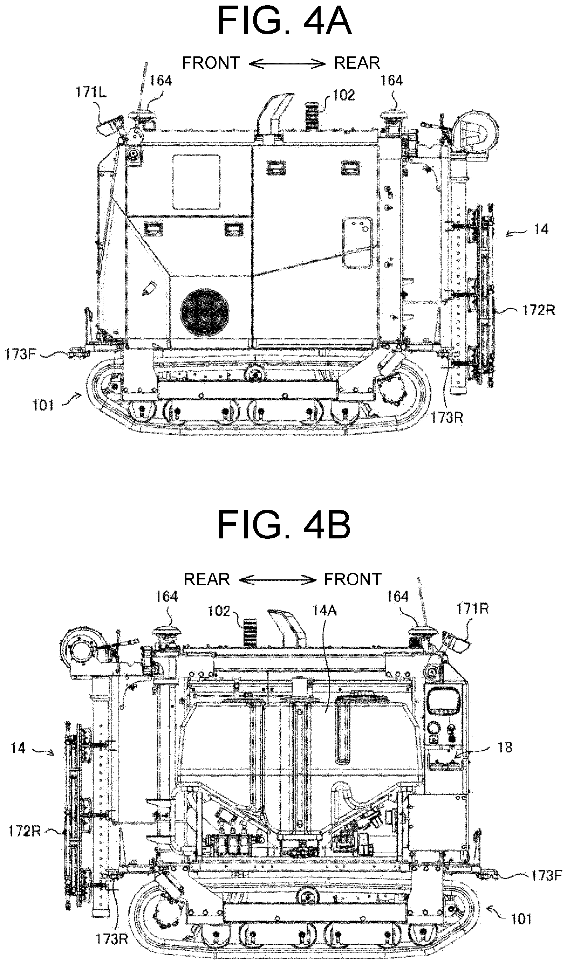

FIG. 3 is an external view obtained when the work vehicle 10 is viewed from a left front side. FIG. 4A is an external view of a left side face obtained when the work vehicle 10 is viewed from a left side, FIG. 4B is an external view of a right side face obtained when the work vehicle 10 is viewed from a right side, and FIG. 4C is an external view of a rear face obtained when the work vehicle 10 is viewed from a rear face side.

As illustrated in FIGS. 1 to 4, the work vehicle 10 includes a vehicle control device 11, a storage unit 12, a travel device 13, a spray device 14, a communication unit 15, a positioning device 16, and an obstacle detection device 17, for example. The vehicle control device 11 is electrically connected to the storage unit 12, the travel device 13, the spray device 14, the positioning device 16, and the obstacle detection device 17, for example. The vehicle control device 11 and the positioning device 16 may be capable of performing wireless communication.

The communication unit 15 is a communication interface for connecting the work vehicle 10 to the communication network N1 in a wired or wireless manner to execute data communication according to a predetermined communication protocol between the work vehicle 10 and an external device such as the operation terminal 20 via the communication network N1.

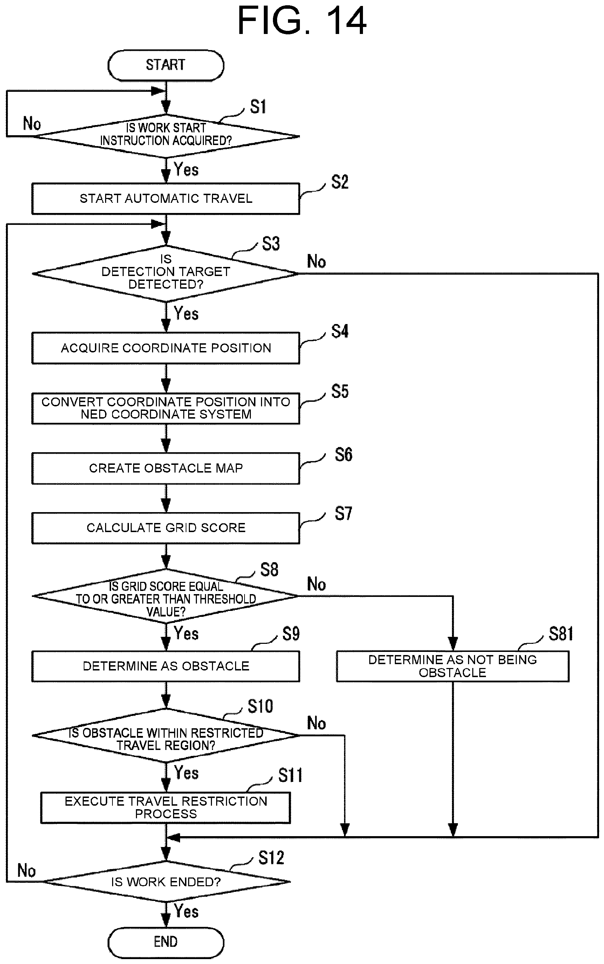

The storage unit 12 is a non-volatile storage unit such as a hard disk drive (HDD) and a solid state drive (SSD) that stores various types of information. The storage unit 12 stores a control program such as an automatic traveling program for causing the vehicle control device 11 to execute an automatic traveling process (see FIG. 14) described later. For example, the automatic traveling program is recorded non-temporarily on a computer-readable recording medium such as a CD or a DVD, and is read by a predetermined reading device (not illustrated) to be stored in the storage unit 12. The automatic traveling program may be downloaded from a server (not illustrated) to the work vehicle 10 via the communication network N1 to be stored in the storage unit 12. The storage unit 12 stores route data including information about the target route R generated by the operation terminal 20. For example, the route data is transferred from the operation terminal 20 to the work vehicle 10 to be stored in the storage unit 12.

Here, the work vehicle 10 includes an inverted U-shaped vehicle body 100 that travels across the crops V (fruit trees) planted side by side in a plurality of rows in the farm field F. As illustrated in FIG. 4C, the vehicle body 100 is formed in an inverted U-shape by the left-side part 100L, the right-side part 100R, and a connection unit 100C connecting the left-side part 100L and the right-side part 100R, and a space 100S that allows the passage of the crops V is secured inside the left-side part 100L, the right-side part 100R, and the connection unit 100C.

A crawler 101 is provided at the lower end of each of the left-side part 100L and the right-side part 100R of the vehicle body 100. The left-side part 100L is provided with an engine (not illustrated), a battery (not illustrated), and the like. The right-side part 100R is provided with a storage tank 14A (see FIG. 4B) of the spray device 14 and the like. Thus, constitution components are arranged in a distributed manner in the left-side part 100L and the right-side part 100R of the vehicle body 100, and thus, a balance between the left and right sides and a low center of gravity are achieved in the work vehicle 10. Thus, the work vehicle 10 can stably travel on a slope or the like of the farm field F.

The travel device 13 is a drive unit that causes the work vehicle 10 to travel. The travel device 13 includes the engine, the crawler 101, and the like.

The left and right crawlers 101 are driven by power from the engine in a state where independent transmission is possible by a hydrostatic continuously variable transmission. Thus, when the left and right crawlers 101 are driven at a constant speed in the forward direction, the vehicle body 100 is in a forward-moving state of moving straight in the forward direction, and when the left and right crawlers 101 are driven at a constant speed in the backward direction, the vehicle body 100 is in a backward-moving state of moving straight in the backward direction. When the left and right crawlers 101 are driven at an irregular speed in the forward direction, the vehicle body 100 is in a forward-moving and turning state where the vehicle body 100 moves forward while turning, and when the left and right crawlers 101 are driven at an irregular speed in the backward direction, the vehicle body 100 is in a backward-moving and turning state where the vehicle body 100 moves backward while turning. When one of the left and right crawlers 101 is stopped in drive while the other one of the crawlers 101 is driven, the vehicle body 100 is in a pivot turning (pivot turn) state, and when the left and right crawlers 101 are driven at a constant speed in the forward direction and in the backward direction, the vehicle body 100 is in a spin turning (neutral turn) state. When the left and right crawlers 101 are stopped in drive, the vehicle body 100 stops traveling. The left and right crawlers 101 may have an electrically driven configuration in which the left and right crawlers 101 are driven by an electric motor.

As illustrated in FIG. 4C, the spray device 14 includes the storage tank 14A that stores chemical liquids or the like, a spraying pump (not illustrated) that pumps chemical liquids or the like, an electric spraying motor (not illustrated) that drives the spraying pump, two spraying pipes 14B installed in parallel on each of the left and right in a vertical position at the rear of the vehicle body 100, a total of 12 spraying nozzles 14C in which three nozzles are installed on each of the spraying pipes 14B, an electronically controlled valve unit (not illustrated) that changes a spraying amount and a spraying pattern of a chemical liquid, a plurality of spraying pipes (not illustrated) that connects these components, and the like.

Each of the spraying nozzles 14C is changeably attached to the corresponding spraying pipe 14B to be vertically repositionable. Thereby, each of the spraying nozzles 14C can change a distance from an adjacent spraying nozzle 14C and a height position with respect to the spraying pipe 14B according to the targets (crops V) to be sprayed. Further, each of the spraying nozzles 14C is attached so that the height position and the left-right position with respect to the vehicle body 100 can be changed according to the targets to be sprayed.

In the spray device 14, the number of the spraying nozzles 14C provided in each of the spraying pipes 14B can be variously changed according to the type of crops V, the length of each of the spraying pipes 14B, and the like.

As illustrated in FIG. 4C, three spraying nozzles 14C provided on the leftmost spraying pipe 14B out of the plurality of spraying nozzles 14C spray the chemical liquid to the left toward a crop Va located on the leftward and outward of the vehicle body 100. Three spraying nozzles 14C provided on the left inner spraying pipe 14B adjacent to the leftmost spraying pipe 14B out of the plurality of spraying nozzles 14C spray the chemical liquid to the right toward a crop Vb located in the left and right central space 100S of the vehicle body 100. Three spraying nozzles 14C provided on the rightmost spraying pipe 14B out of the plurality of spraying nozzles 14C spray the chemical liquid to the right toward a crop Vc located on the rightward and outward of the vehicle body 100. Three spraying nozzles 14C provided on the right inner spraying pipe 14B adjacent to the rightmost spraying pipe 14B out of the plurality of spraying nozzles 14C spray the chemical liquid to the left toward the crop Vb located in the space 100S.

With the above configuration, in the spray device 14, the two spraying pipes 14B and the six spraying nozzles 14C provided on the left-side part 100L of the vehicle body 100 function as a left spraying unit 14L. Further, the two spraying pipes 14B and the six spraying nozzles 14C provided on the right-side part 100R of the vehicle body 100 function as a right spray portion 14R. The left and right spraying units 14L and 14R are provided with a horizontal interval allowing for passage of the crop Vb (the space 100S) between the left and right spraying units 14L and 14R in a state where the left and right spraying units 14L and 14R can spray the chemical liquid in the left-right direction on the rear of the vehicle body 100.

In the spray device 14, the spraying patterns of the spraying units 14L and 14R include a four-way spraying pattern in which each of the spraying units 14L and 14R sprays the chemical liquid in both the left and right directions, and a direction-restricted spraying pattern in which the spraying direction of the spraying units 14L and 14R is restricted. The direction-restricted spraying pattern includes a left-side three-way spraying pattern in which the spraying unit 14L sprays the chemical liquid in both the left and right directions and the spraying unit 14R sprays the chemical liquid only in the left direction, and a right-side three-way spraying pattern in which the spraying unit 14L sprays the chemical liquid only in the right direction and the spraying unit 14R sprays the chemical liquid in both the left and right directions, a two-way spraying pattern in which the spraying unit 14L sprays the chemical liquid only in the right direction and the spraying unit 14R sprays the chemical liquid only in the left direction, a left-side unidirectional spraying pattern in which the spraying unit 14L sprays the chemical liquid only in the left direction and the spraying unit 14R does not spray the chemical liquid, and a right-side unidirectional spraying pattern in which the spraying unit 14R sprays the chemical liquid only in the right direction and the spraying unit 14L does not spray the chemical liquid.

The vehicle body 100 is equipped with an automatic travel control unit that causes the vehicle body 100 to automatically travel according to the target route R of the farm field F, based on the positioning information and the like acquired from the positioning device 16, an engine control unit that controls the engine, a hydro-static transmission (HST) control unit that controls the hydrostatic continuously variable transmission, and a work device control unit that controls a work device such as the spray device 14. Each of the control units is constructed by an electronic control unit equipped with a microcontroller and the like, various types of information and control programs stored in a non-volatile memory (for example, an EEPROM such as a flash memory) of the microcontroller, and the like. The various types of information stored in the non-volatile memory may include the target route R generated in advance or the like. In the present embodiment, the control units are collectively referred to as the "vehicle control device 11" (see FIG. 2).

The positioning device 16 is a communication equipment including a positioning control unit 161, a storage unit 162, a communication unit 163, the antenna 164, and the like. The antenna 164 is provided at the front and rear parts of a roof (the connection unit 100C) of the vehicle body 100 (see FIG. 3). The roof of the vehicle body 100 is also provided with an indication lamp 102 or the like for indicating a travel state of the work vehicle 10 (see FIG. 3). The battery is connected to the positioning device 16, so that the positioning device 16 can operate even when the engine is stopped.

The communication unit 163 is a communication interface for connecting the positioning device 16 to the communication network N1 in a wired or wireless manner to execute data communication, according to a predetermined communication protocol, between the communication unit 163 and an external device such as the base station 40 via the communication network N1.

The antenna 164 is an antenna that receives radio waves (GNSS signals) transmitted from satellites. Since the antenna 164 is provided at the front and rear parts of the work vehicle 10, the current position and the current orientation of the work vehicle 10 can be accurately positioned.

The positioning control unit 161 is a computer system including one or more processors and a storage memory such as a non-volatile memory and a RAM. The storage unit 162 is a control program for causing the positioning control unit 161 to execute the positioning process, and a non-volatile memory for storing data such as positioning information and movement information. The positioning control unit 161 positions the current position and the current orientation of the work vehicle 10 by a predetermined positioning method (RTK method or the like) based on the GNSS signal received from the satellite 50 by the antenna 164.

The obstacle detection device 17 detects a detection target in the farm field F by a detection unit (a LiDAR sensor, an ultrasonic sensor) provided in the work vehicle 10. The obstacle detection device 17 includes a LiDAR sensor 171L provided on the front and left side of the vehicle body 100 and a LiDAR sensor 171R provided on the front and right side of the vehicle body 100 (see FIG. 3). Each LiDAR sensor measures a distance from the LiDAR sensor to each ranging point (detection target) within a measurement range by a time of flight (TOF) method for measuring a distance to a ranging point, based on a round-trip time from when laser light is transmitted by the LiDAR sensor to reach the ranging point to when the laser light returns.

The LiDAR sensor 171L has a predetermined range on the front and left side of the vehicle body 100 set as a measurement range, and the LiDAR sensor 171R has a predetermined range on the front and right side of the vehicle body 100 set as a measurement range. Each LiDAR sensor transmits measurement information (a coordinate position) such as a measured distance to each ranging point and a scanning angle for each ranging point to the vehicle control device 11. Thus, the LiDAR sensors 171L and 171R can detect the position (coordinate position) of the ranging point (detection target) in a coordinate system (sensor coordinate system) using the LiDAR sensors 171L and 171R (mounting positions) as a reference.

The obstacle detection device 17 includes left and right ultrasonic sensors 172F (see FIG. 3) provided on the front side of the vehicle body 100 and left and right ultrasonic sensors 172R (see FIGS. 4A to 4C) provided on the rear side of the vehicle body 100. Each ultrasonic sensor measures a distance from the ultrasonic sensor to a ranging point (detection target) by the TOF method for measuring a distance to the ranging point, based on a round-trip time from when an ultrasonic wave is transmitted by the ultrasonic sensor to reach the ranging point to when the ultrasonic wave returns.

The ultrasonic sensor 172F on the front and left side has a predetermined range on the front and left side of the vehicle body 100 set as a measurement range, the ultrasonic sensor 172F on the front and right side has a predetermined range on the front and right side of the vehicle body 100 set as a measurement range, the ultrasonic sensor 172R on the rear and left side has a predetermined range on the rear and left side of the vehicle body 100 set as a measurement range, and the ultrasonic sensor 172R on the rear and right side has a predetermined range on the rear and right side of the vehicle body 100 set as a measurement range. Each ultrasonic sensor transmits, to the vehicle control device 11, measurement information including a measured distance to a measurement target and a direction of the measurement target. Thus, the ultrasonic sensors 172F can detect the distance to the ranging point (detection target) in a coordinate system (sensor coordinate system) using the ultrasonic sensors 172F (mounting position) as a reference. The LiDAR sensors 171L and 171R and the ultrasonic sensors 172F are examples of the detection unit in the present invention.

The obstacle detection device 17 includes left and right contact sensors 173F (see FIG. 3) provided on the front side of the vehicle body 100 and left and right contact sensors 173R (see FIGS. 4A and 4B) provided on the rear side of the vehicle body 100. The contact sensors 173F on the front side of the vehicle body 100 detect an obstacle if an obstacle contacts the contact sensors 173F. A spray device 14 is provided in front of the contact sensors 173R on the rear side of the vehicle body 100 (rear side of the work vehicle 10), and if an obstacle contacts the spray device 14, the spray device 14 moves to the rear (front side of the work vehicle 10) so that each of the contact sensors 173R detects the obstacle. Each of the contact sensors 173F and 173R transmits a detection signal to the vehicle control device 11 when the obstacle is detected. The contact sensors 173F and 173R are examples of a contact detection unit in the present invention.

The vehicle control device 11 determines whether the detection target is an obstacle, based on the measurement information relating to the detection target acquired from the obstacle detection device 17, and when determining that the detection target is an obstacle, the vehicle control device 11 executes an avoidance process (travel restriction process) of causing the work vehicle 10 to avoid the obstacle. The obstacle detection device 17 is an example of a detection processing unit in the present invention.

The vehicle control device 11 includes a control device such as a CPU, a ROM, and a RAM The CPU is a processor that executes various types of arithmetic processes. The ROM is a non-volatile storage unit in which a control program such as BIOS and OS for causing the CPU to execute various types of arithmetic processes is stored in advance. The RAM is a volatile or non-volatile storage unit that stores various types of information, and is used as a temporary storage memory (work region) for various types of processes executed by the CPU. The vehicle control device 11 controls the work vehicle 10 by causing the CPU to execute various types of control programs stored in advance in the ROM or the storage unit 12.

The vehicle control device 11 controls the travel of the work vehicle 10. Specifically, as illustrated in FIG. 2, the vehicle control device 11 includes various types of processing units such as a travel processing unit 111, an acquisition processing unit 112, a conversion processing unit 113, and a determination processing unit 114. The vehicle control device 11 functions as the various types of processing units by causing the CPU to execute various types of processes according to the control programs. Some or all of the processing units may be configured by an electronic circuit. The control programs may be programs for causing a plurality of processors to function as the processing units.

The travel processing unit 111 executes a traveling process for controlling a travel operation of the work vehicle 10. For example, the travel processing unit 111 causes the work vehicle 10 to travel in a target route travel mode M1 in which the work vehicle 10 automatically travels along the target route R, based on positioning information including a position and an orientation of the work vehicle 10 positioned by the positioning device 16. For example, if a positioning state in a region not arranged with the crops V (a headland region, a non-work region, and the like) is a state allowing for RTK positioning, the travel processing unit 111 causes the work vehicle 10 to start automatic travel in the target route travel mode M1, based on the positioning information of the work vehicle 10 positioned by the positioning device 16. Thus, the work vehicle 10 starts automatic travel along the target route R. The fact that the positioning state is a state allowing for RTK positioning (high accuracy state) is included in a condition for the work vehicle 10 to start automatic travel (automatic travel start condition).

Thus, the travel processing unit 111 causes the work vehicle 10 to automatically travel in the target route travel mode M1 in the region (headland region or the like) not arranged with the crops V in the farm field F. The work vehicle 10 travels along the target route R while estimating the position of the work vehicle 10 by utilizing the GNSS signal.

The travel processing unit 111 causes the work vehicle 10 to travel in a crop row route travel mode M2 in which the work vehicle 10 automatically travels along a crop row route R0 set according to the positions of the crops V arranged in the farm field F. The crop row route travel mode M2 is a travel mode in which the work vehicle 10 travels along the crop row route R0 estimated based on the measurement results of the LiDAR sensors 171L and 171R, for example. Specifically, the obstacle detection device 17 integrates the results of detecting obstacles on the work path R1 and the measurement results of the LiDAR sensors 171L and 171R to estimate the work route R1 over which the work vehicle 10 spans, specifically, the crop row route R0 of a crop row (crop row Vr5 in FIG. 6). The obstacle detection device 17 also transmits the positions (coordinates) of a starting point and an ending point of the estimated crop row route R0 to the vehicle control device 11. In the crop row route travel mode M2, the travel processing unit 111 causes the work vehicle 10 to automatically travel along the estimated crop row route R0 while estimating the position of the travel processing unit 111 by utilizing the GNSS signal. Thus, in the target route travel mode M1, while the travel processing unit 111 causes the work vehicle 10 to automatically travel along the target route R by utilizing the positioning information, in the crop row route travel mode M2, the travel processing unit 111 causes the work vehicle 10 to automatically travel along the crop row route R0 by utilizing the positioning information and the results of detecting the crops V.

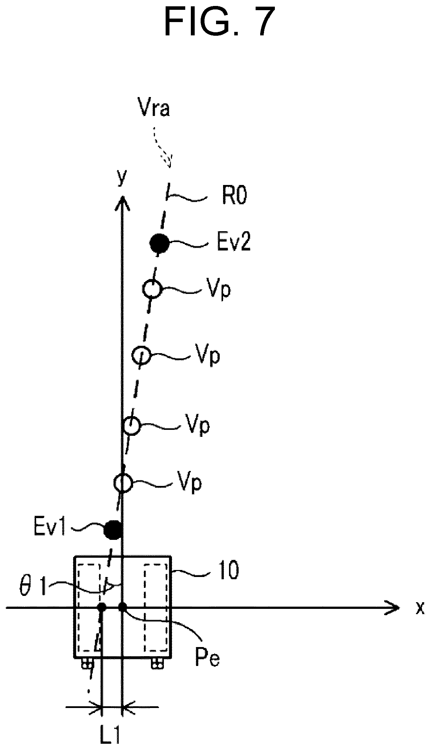

FIG. 7 illustrates an outline of a travel method for the crop row route travel mode M2. In FIG. 7, R0 represents an estimated route of a crop row Vra, Ev1 represents the starting point of the crop row Vra, Ev2 represents the ending point of the crop row Vra, Vp represents a crop included in the crop row Vra, and Pe represents the current position (center position) of the work vehicle 10. It is noted that the ending point Ev2 may be the same as the end point (ending point) illustrated in FIG. 6. The starting point Ev1 is, for example, a position of the crop V closest to the current position Pe among the crops V included in the crop row Vra.

The travel processing unit 111 calculates a horizontal position deviation L1 and an orientation deviation $\theta1$ of the work vehicle 10 with respect to the crop row Vra, and causes the work vehicle 10 to travel from the current position Pe to the ending point Ev2 while controlling the posture of the work vehicle 10 so that the position deviation L1 and the orientation deviation $\theta1$ decrease.

Here, the result of estimating the crop row Vra includes an error, and thus, it is preferable to perform a filtering process using a moving average filter, a low-pass filter, or the like on the calculated position deviation L1 and orientation deviation $\theta1$. It is preferable that the travel processing unit 111 controls the travel of the work vehicle 10 by using a result of the filtering process.

To improve the accuracy of estimating the crop row Vra, a result of estimating a past crop row Vra may be used. In this case, it is necessary to increase the number of end points in the crop row Vra, and it is thus necessary to calculate a relative movement amount of the work vehicle 10 to use past data, and convert the coordinates of the detected positions of the past crop row Vra. In the calculation of the relative movement amount, the data of a rotation speed sensor and an inertial measurement unit (IMU) mounted in the crawler 101 are integrated by a known method such as a Kalman filter to estimate a movement amount of the crop row Vra. The work vehicle 10 calculates the distance to the ending point from the positioning information (GNSS position information) every control cycle during automatic travel, and thus, the travel processing unit 111 executes a process for determining the arrival of the work vehicle 10 at the end point (the ending point Ev2) of the crop row Vra, based on information about the distance to the ending point before the positioning accuracy is less than a predetermined accuracy and the estimated movement amount of the work vehicle 10, and causes the work vehicle 10 to automatically travel until the work vehicle 10 arrives at the end point. Depending on the arrangement state of the crops V, the LiDAR sensors 171L and 171R may fail to detect the crops V In this case, if an estimation error the crop row Vra occurs continuously a prescribed number of times, the travel processing unit 111 terminates the automatic travel in the crop row route travel mode M2.

As described above, the travel processing unit 111 causes the work vehicle 10 to automatically travel in the target route travel mode M1 or the crop row route travel mode M2 in accordance with the positions of the crops V in the farm field F.

Here, for example, when the work vehicle 10 automatically travels along the crop row route R0 in the crop row route travel mode M2, if the posture of the work vehicle 10 changes and the position deviation L1 and the orientation deviation $\theta1$ with respect to the crop row route R0 increase, the work vehicle 10 may detect the crops V of the crop row route R0, the crops V adjacent to the crop row route R0, and the like a predetermined number of times, and thus, determine the crops V to be an obstacle. For example, when the work vehicle 10 changes the posture, detects the crops V of the crop row route R0 a predetermined number of times, and further detects the crops V adjacent to the crop row path R0 a predetermined number of times, if the total number of detections is equal to or greater than a threshold value, the work vehicle 10 executes a travel restriction process such as travel at a reduced speed or stop traveling, to avoid a collision with the obstacle. As described above, in the conventional technique, erroneous recognition of an obstacle leads to the problem that the work efficiency of the work vehicle 10 deteriorates. On the other hand, with the work vehicle 10 according to the present embodiment, it is possible to improve the work efficiency by increasing the determination accuracy (recognition accuracy) of obstacles, as described below.

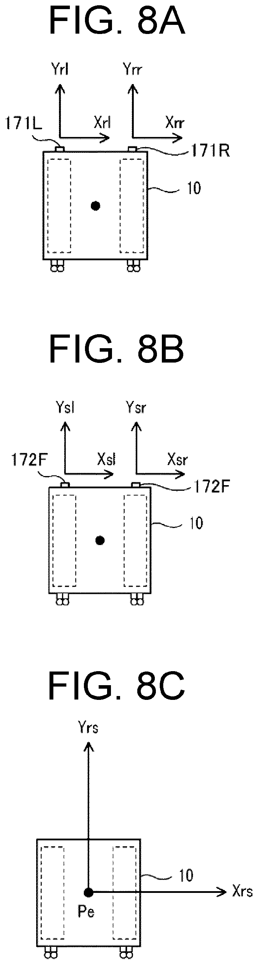

Specifically, the acquisition processing unit 112 acquires a first coordinate position representing a position of a detection target in a coordinate system having the obstacle detection device 17 as a reference. For example, as illustrated in FIG. 8A, if the LiDAR sensors 171L and 171R detect a detection target, the obstacle detection device 17 calculates a coordinate position of the detection target in a sensor coordinate system (an example of a first coordinate system in the present invention) having the LiDAR sensor 171L as a reference and a coordinate position of the detection target in a sensor coordinate system (an example of the first coordinate system in the present invention) having the LiDAR sensor 171R as a reference, and transmits the calculated coordinate positions to the vehicle control device 11. The acquisition processing unit 112 acquires, from the obstacle detection device 17, information about the coordinate positions having the LiDAR sensors 171L and 171R as a reference. The LiDAR sensors 171L and 171R are examples of a first detection unit in the present invention.

For example, as illustrated in FIG. 8B, if the left and right ultrasonic sensors 172F detect a detection target, the obstacle detection device 17 calculates a distance to the detection target in a sensor coordinate system (an example of the first coordinate system in the present invention) having the left ultrasonic sensor 172F as a reference and a distance to the detection target in a sensor coordinate system (an example of the first coordinate system in the present invention) having the right ultrasonic sensor 172F as a reference, and transmits the calculated distances to the vehicle control device 11. The acquisition processing unit 112 acquires, from the obstacle detection device 17, information about the distances calculated by using each of the left and right ultrasonic sensors 172F as a reference. The obstacle detection device 17 may calculate the coordinate position of the detection target in the sensor coordinate system, based on a detectable range (detection width) and the detection result (distance) of the ultrasonic sensors 172F, and transmit information about the coordinate position to the vehicle control device 11. The ultrasonic sensors 172F are an example of a second detection unit in the present invention.

The conversion processing unit 113 converts the first coordinate position representing the position of the detection target in the sensor coordinate system having the obstacle detection device 17 as a reference, into a second coordinate position representing the position of the detection target in a coordinate system having the farm field F as a reference (an example of a second coordinate system in the present invention). The coordinate system having the farm field F as a reference is a global coordinate system, for example, a three-dimensional coordinate system (an NED coordinate system) in which the three directions of North-East-Down are positive.

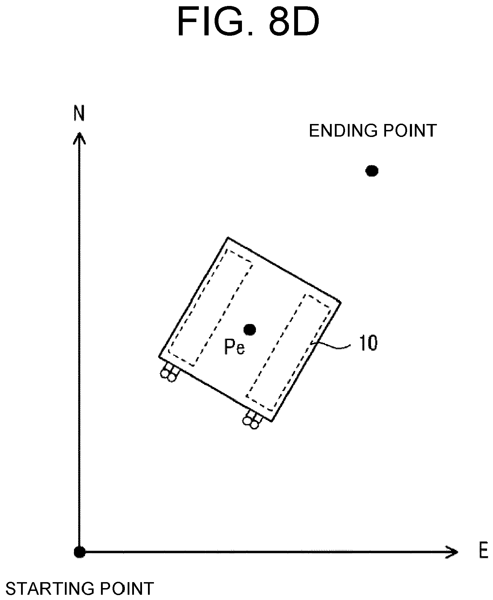

The conversion processing unit 113 converts the coordinate position of the detection target acquired in each sensor coordinate system into a coordinate position in the NED coordinate system. Specifically, the conversion processing unit 113 converts, based on an attachment position of each sensor (the LiDAR sensors 171L and 171R, and the ultrasonic sensors 172F) and the coordinate position of the detection target detected by each sensor, the coordinate position of the detection target from the sensor coordinate system into a coordinate position in a vehicle coordinate system (see FIG. 8C). The conversion processing unit 113 uses the current center position Pe of the work vehicle 10 in the NED coordinate system and an average value of an orientation angle of the work vehicle 10 in a previous coordinate conversion and a current orientation angle of the work vehicle 10, to convert the coordinate position of the detection target detected by each sensor in the vehicle coordinate system into the NED coordinate system (see FIG. 8D).

The conversion processing unit 113 also uses a past detection result of the detection target to convert the coordinate position of the detection target into a coordinate position in the NED coordinate system. The NED coordinate data of the detection target of each sensor has an upper limit for the maximum number of points to be stored for each sensor being used, and if the number of data points is equal to or greater than a prescribed number, the conversion processing unit 113 discards pieces of data starting from the oldest data.

The determination processing unit 114 determines whether the detection target is an obstacle, based on the second coordinate position representing the position of the detection target in the coordinate system (the NED coordinate system) having the farm field F as a reference. Specifically, the determination processing unit 114 determines that the detection target is an obstacle, if the second coordinate position is included in an obstacle determination region Ar set in a predetermined range from the work vehicle 10. The determination processing unit 114 determines whether the detection target is an obstacle, based on the second coordinate position of the detection target detected based on the detection results of the LiDAR sensors 171L and 171R, and the second coordinate position of the detection target detected based on the detection results of the ultrasonic sensors 172F.

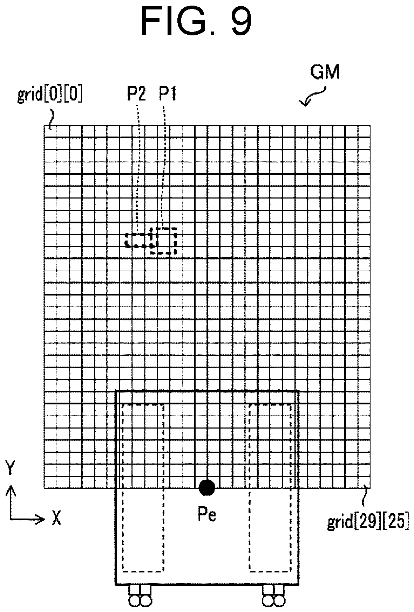

Specifically, the determination processing unit 114 creates an obstacle map GM (grid map) for determining whether the detection target is an obstacle. FIG. 9 is a diagram illustrating an example of the obstacle map GM. The obstacle map GM is a grid map in which an area of 3.0 m in the Y direction and ± 1.3 m in the X direction is divided in a grid pattern with the center position Pe of the work vehicle 10 as the origin point. The length of one side in one grid (square grid) is 0.1 m. The entire obstacle map GM has a size of 30 grids (H) in the Y (height) direction and 26 grids (W) in the X (width) direction. P1 illustrated in FIG. 9 indicates the position of the detection target detected by the LiDAR sensors 171L and 171R, and P2 illustrated in FIG. 9 indicates the position of the detection target detected by the ultrasonic sensors 172F.

When the detection target is present at a position corresponding to each grid, the determination processing unit 114 calculates a score (evaluation value) of the grid. Specifically, the determination processing unit 114 updates the score with different weights for each sensor (the LiDAR sensors 171L and 171R, and the ultrasonic sensors 172F) that detects the detection target in each grid in the obstacle map GM. An example of a method of calculating the score for each sensor will be described below.

When the coordinate position of the detection target detected by the LiDAR sensors 171L and 171R is converted to the grid map coordinates grid [i] [j], if i < H and j < W are satisfied, the determination processing unit 114 updates each grid score by the following equation. The same detection target may be detected a plurality of times, and thus, the grid score increases as the number of times the detection target is detected at the same position is higher.

$$\text{grid } [i] \ [j] = \text{grid } [i] \ [j] + 1.0$$

When the coordinate position of the detection target detected by the ultrasonic sensors 172F is converted into the grid [i] [j], if i < H and j < W are satisfied, the determination processing unit 114 updates each grid score by the following equations.

$$\text{grid } [i] \ [j] + = 0.2$$

$$\text{grid } [i] \ [j - 1] + = 0.2$$

$$\text{grid } [i] \ [j + 1] + = 0.2$$

Here, the position of the detection target in the horizontal direction (X direction) is unknown in the case of the ultrasonic sensors 172F, and thus, the determination processing unit 114 may expand the detection width of the ultrasonic sensors 172F in the horizontal direction. Thus, the determination processing unit 114 predicts that the detection target is present in a region of the expanded detection width. The ultrasonic sensors 172F may detect the ground depending on the posture of the work vehicle 10 or detect branches and leaves protruding from the crop row Vr into the region (space) of the interval W2 (see FIG. 5), and thus, the determination processing unit 114 adjusts the score of the ultrasonic sensors 172F to take a value relatively lower than the score of the LiDAR sensors 171L and 171R to improve the accuracy of determining the obstacle. Specifically, in a determination process for determining whether the detection target is an obstacle, the determination processing unit 114 sets the weight of the score of the ultrasonic sensors 172F (an example of a second evaluation value in the present invention) to a value smaller than the weight of the score of the LiDAR sensors 171L and 171R (an example of a first evaluation value in the present invention).

If the work vehicle 10 turns and travels in a headland region, the posture changes significantly, so that it is necessary to surely detect an obstacle in the vicinity of the work vehicle 10, and the ultrasonic sensors 172F need to detect an obstacle in a dead angle region of the LiDAR sensors 171L and 171R. If the work vehicle 10 turns and travels, the traveling speed is slower than that during straight forward travel, so that the number of times an obstacle is detected increases. Thus, even if the weight of the score of the ultrasonic sensors 172F is set to a value smaller than the weight of the score of the LiDAR sensors 171L and 171R, there is no problem in the practical implementation.

Here, the obstacle detection device 17 (the LiDAR sensors 171L and 171R, and the ultrasonic sensors 172F) detects the coordinate position of the detection target, but fails to identify the shape (size) of the detection target. Therefore, the determination processing unit 114 updates the score of the grid in the vicinity of the obstacle on the assumption that the obstacle may be present at a position close to an observation point, based on the Gaussian distribution of the following equation.

[Math. 1]

$$ f(x, y) = \frac{1}{2\pi\sigma^2} exp \left( -\frac{x^2 + y^2}{2\sigma^2} \right) $$

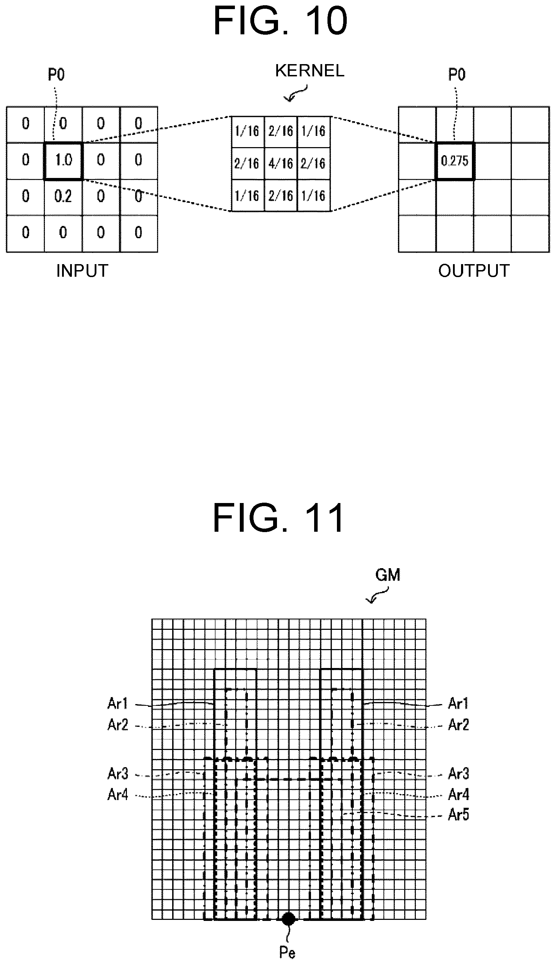

The determination processing unit 114 updates the score of the obstacle map GM by a convolution process using a kernel in the vicinity of a targeted grid P0 illustrated in FIG. 10. For example, the determination processing unit 114 converts the score "1.0" of the targeted grid P0 into "0.275" by using the kernel illustrated in FIG. 10. That is, the determination processing unit 114 executes an averaging process (for example, a Gaussian filter process) for the score of the obstacle map GM. The determination processing unit 114 may also execute another well-known averaging process.

The determination processing unit 114 sets the obstacle determination region Ar (see FIG. 11) according to the work region of the work vehicle 10, and if the maximum score of the grid in the set obstacle determination region Ar is equal to or greater than a previously set threshold value, the determination processing unit 114 determines the detection target to be an obstacle.

FIG. 11 illustrates a plurality of obstacle determination regions Ar1 to Ar5 set in accordance with a travel region of the work vehicle 10. The obstacle determination region Ar1 indicates a reduced-speed determination region (an example of a reduced-speed travel region in the present invention) where the work vehicle 10 is caused to travel at a reduced speed. The obstacle determination regions Ar2 and Ar3 are regions set in the work region (the work route R1) and indicate a travel-stopped determination region (an example of a travel-stopped region in the present invention) where the work vehicle 10 is stopped. The obstacle determination regions Ar4 and Ar5 are regions set in a non-work region (a headland region) and indicate a travel-stopped determination region (an example of the travel-stopped region in the present invention) where the work vehicle 10 is stopped.

For example, the obstacle determination region Ar1 is set to an area having a depth of 2.5 m and a width of 0.4 m (0.2 m to each side) with respect to the center positions of the left and right crawlers 101 ($\pm$ 0.5 m in the horizontal direction from the center position Pe of the work vehicle 10). The obstacle determination region Ar2 is set to an area having a depth of 2.3 m and a width of 0.2 m with respect to the center positions of the left and right crawlers 101. The obstacle determination region Ar3 is set to an area having a depth of 1.6 m and a width of 0.6 m with respect to the center positions of the left and right crawlers 101. The obstacle determination region Ar4 is set to an area having a depth of 1.6 m and a width of 0.4 m with respect to the center positions of the left and right crawlers 101. The obstacle determination region Ar5 is set to an area having a depth of 1.4 m and a width of 1.0 m (tread width) with respect to the center position Pe of the work vehicle 10. The work vehicle 10 travels at a low speed in the headland region, and thus, the reduced-speed determination region may not be set and only the travel-stopped determination region (the obstacle determination regions Ar4 and Ar5) may be set.

The determination processing unit 114 determines that the detection target is an obstacle, if the obstacle determination region Ar (the obstacle determination regions Ar1 to Ar5) includes a grid of which a score corresponding to the detection target is equal to or greater than the threshold value. The obstacle determination regions Ar1 to Ar5 are examples of restricted travel regions in the present invention.

As described above, the determination processing unit 114 determines whether the detection target is an obstacle, based on a first score (the first evaluation value in the present invention) corresponding to the number of times the second coordinate position corresponding to the detection target detected by the LiDAR sensors 171L and 171R is detected, and a second score (the second evaluation value in the present invention) corresponding to the number of times the second coordinate position corresponding to the detection target detected by the ultrasonic sensors 172F is detected. The determination processing unit 114 sets the weight of the second score to a value smaller than the weight of the first score in the determination process for determining whether the detection target is an obstacle. The determination processing unit 114 determines that the detection target is an obstacle when the total value of the first score and the second score is equal to or greater than a previously set threshold value.

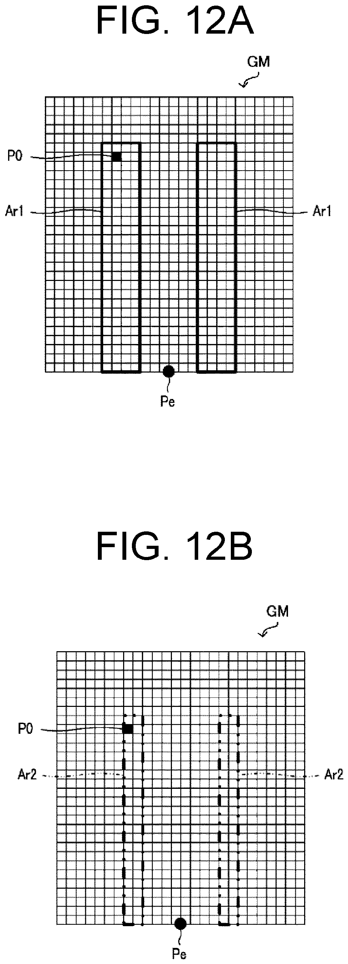

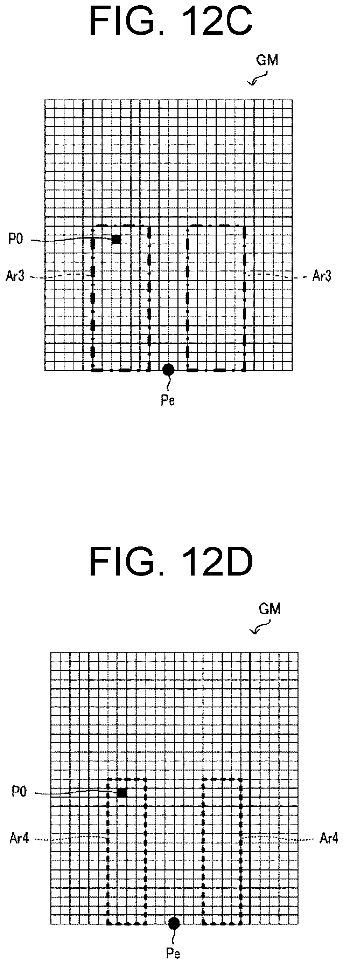

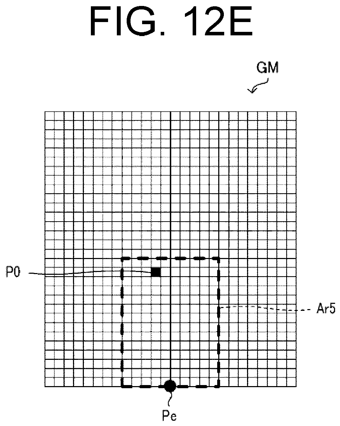

If it is determined that the detection target is an obstacle, the travel processing unit 111 executes the travel restriction process (travel at a reduced speed, travel stop, and the like) in accordance with the obstacle determination region Ar. For example, the travel processing unit 111 causes the work vehicle 10 to travel at a reduced speed, if the obstacle determination region Ar1 (see FIG. 12A) includes the grid P0 of which the score corresponding to the detection target (the obstacle) detected while the work vehicle 10 is traveling on the work route R1 is equal to or greater than the threshold value. The travel processing unit 111 causes the work vehicle 10 to stop if the obstacle determination region Ar2 (see FIG. 12B) or the obstacle determination region Ar3 (see FIG. 12C) includes the grid P0 of which the score corresponding to the detection target (the obstacle) detected while the work vehicle 10 is traveling on the work route R1 is equal to or greater than the threshold value. For example, the travel processing unit 111 causes the work vehicle 10 to stop if the obstacle determination region Ar4 (see FIG. 12D) or the obstacle determination region Ar5 (see FIG. 12E) includes the grid P0 of which a score corresponding to the detection target (the obstacle) detected while the work vehicle 10 is traveling in a headland region is equal to or greater than the threshold value.

As described above, the restricted travel region in the present invention includes a reduced-speed travel region (the obstacle determination region Ar1) and a travel-stopped region (the obstacle determination regions Ar2 to Ar5). If the second coordinate position representing the position of the detection target in the coordinate system (NED coordinate system) having the farm field F as a reference is included in the reduced-speed travel region, the travel processing unit 111 determines that the detection target is an object and causes the work vehicle 10 to travel at a reduced speed. If the second coordinate position is included in the travel-stopped region, the travel processing unit 111 determines that the detection target is an obstacle and causes the work vehicle 10 to stop.

As described above, the determination processing unit 114 converts the first coordinate position of the detection target in the sensor coordinate system having the obstacle detection device 17 as a reference, into the second coordinate position representing the position of the detection target in the coordinate system (NED coordinate system) having the farm field F as a reference, to determine whether the detection target is an obstacle, based on the second coordinate position.

Thus, it is possible to identify the position of the detection target as a position with respect to the farm field F (global coordinates), so that it is possible to accurately determine whether the detection target is an obstacle.

In another embodiment, the determination processing unit 114 may not determine the detection target as an obstacle if the detection target is not detected by the obstacle detection device 17 in a range from the ground of the farm field F to a predetermined height and is detected by the obstacle detection device 17 in a predetermined range above the predetermined height. If the obstacle detection device 17 detects a detection target continuously extending from the ground of the farm field F to a predetermined height, the determination processing unit 114 may determine the detection target as an obstacle. According to such a configuration, for example, branches and leaves protruding from the crop rows Vr into the region (space) of the interval W2 (see FIG. 5) are not determined as obstacles, so that it is possible to prevent the work vehicle 10 from unnecessarily reducing speed or stopping.

In another embodiment, if the contact sensors 173F and 173R (see FIG. 3) detect a contact with the detection target, the travel processing unit 111 may cause the work vehicle 10 to stop, regardless of whether the detection target is an obstacle. Thus, it possible to prevent damage to the work vehicle 10. If the contact sensors 173F and 173R detect a contact with the detection target, the determination processing unit 114 may omit the determination process.

In another embodiment, the travel processing unit 111 causes the work vehicle 10 to travel at a reduced speed if the LiDAR sensors 171L and 171R and the ultrasonic sensors 172F detect an obstacle, and causes the work vehicle 10 to stop if the contact sensors 173F and 173R detect the obstacle. Thus, the work vehicle 10 is not stopped if the LiDAR sensors 171L and 171R and the ultrasonic sensors 172F detect the obstacle, so that it is possible to improve the work efficiency.

Upon acquiring a travel stop instruction from the operation terminal 20, the travel processing unit 111 causes the work vehicle 10 to stop automatic travel. For example, if the operator depresses a stop button on an operation screen of the operation terminal 20, the operation terminal 20 outputs the travel stop instruction to the work vehicle 10. Upon acquiring the travel stop instruction from the operation terminal 20, the travel processing unit 111 causes the work vehicle 10 to stop automatic travel. Thus, the work vehicle 10 stops the automatic travel and stops the spraying work by the spray device 14.

The above-described configuration of the work vehicle 10 is an example of the configuration of the work vehicle according to the present invention, and the present invention is not limited to the above-described configuration. The above-mentioned work vehicle 10 is a vehicle capable of performing the spraying work for spraying the spraying material to the first crop row Vr and the second crop row Vr in each of the left-right direction of the first crop row Vr while traveling across the first crop row Vr. In another embodiment, the vehicle body 100 of the work vehicle 10 may have a typical shape instead of the inverted U-shape, so that the vehicle body 100 entirely travels between the crop rows Vr (work passages). In this case, the work vehicle 10 automatically travels sequentially on each work passage, without spanning over the crop rows Vr. The spray device 14 is provided with one spraying unit and performs a spraying work while switching between a spraying pattern in which the chemical liquid is sprayed in both left and right directions, a spraying pattern in which the chemical liquid is sprayed only in the left direction, and a spraying pattern in which the chemical liquid is sprayed only in the right direction.

[Operation Terminal 20]

As illustrated in FIG. 2, the operation terminal 20 is an information processing device including a control unit 21, a storage unit 22, an operation display unit 23, and a communication unit 24. The operation terminal 20 may be composed of a mobile terminal such as a tablet terminal or a smartphone.

The communication unit 24 is a communication interface for connecting the operation terminal 20 to the communication network N1 in a wired or wireless manner to execute data communication according to a predetermined communication protocol between the operation terminal 20 and an external device such as one or more work vehicles 10 via the communication network N1.

The operation display unit 23 is a user interface including a display unit such as a liquid crystal display or an organic EL display that displays various types of information, and an operation unit such as a mouse, a keyboard, or a touch panel that receives an operation. On the operation screen displayed on the display unit, the operator can operate the operation unit to register various types of information (work vehicle information, farm field information, work information, etc., which will be described later). Further, the operator can operate the operation unit to give a work start instruction, a travel stop instruction, and the like to the work vehicle 10. At a place away from the work vehicle 10, the operator is capable of grasping the travel state, a work situation, and a surrounding situation of the work vehicle 10 automatically traveling according to the target route R within the farm field F, based on a travel trajectory displayed on the operation terminal 20 and a surrounding image of the vehicle body 100.

The storage unit 22 is a non-volatile storage unit, such as an HDD or an SSD that stores various types of information. The storage unit 22 stores a control program such as an automatic traveling program for causing the control unit 21 to execute an automatic traveling process (see FIG. 14) described later. For example, the automatic traveling program is recorded non-temporarily on a computer-readable recording medium such as a CD or a DVD, and is read by a predetermined reading device (not illustrated) to be stored in the storage unit 22. The automatic traveling program may be downloaded from a server (not illustrated) to the operation terminal 20 via the communication network N1 to be stored in the storage unit 22.

The control unit 21 includes control devices such as a CPU, a ROM, and a RAM The CPU is a processor that executes various types of arithmetic processes. The ROM is a non-volatile storage unit in which a control program such as BIOS and OS for causing the CPU to execute various types of arithmetic processes is stored in advance. The RAM is a volatile or non-volatile storage unit that stores various types of information, and is used as a temporary storage memory (working area) for various types of processes executed by the CPU. The control unit 21 controls the operation terminal 20 by causing the CPU to execute various types of control programs stored in advance in the ROM or the storage unit 22.

As illustrated in FIG. 2, the control unit 21 includes various types of processing units such as a setting processing unit 211, a route generation processing unit 212, and an output processing unit 213. The control unit 21 functions as the various types of processing units by causing the CPU to execute various types of processes according to the control programs. Some or all of the processing units may be configured by an electronic circuit. The control programs may be programs for causing a plurality of processors to function as the processing units.

The setting processing unit 211 sets and registers information on the work vehicle 10 (hereinafter referred to as work vehicle information), information on the farm field F (hereinafter referred to as farm field information), and information on work (here, a spraying work) (hereinafter, work information).

In the setting process of the work vehicle information, the setting processing unit 211 sets information about the model of the work vehicle 10, the position where the antenna 164 is attached in the work vehicle 10, kinds of the work machine (here, the spraying device 14), the size and the shape of the work machine, the position of the work machine relative to the work vehicle 10, a vehicle speed and an engine RPM of the work vehicle 10 during working, a vehicle speed and an engine RPM of the work vehicle 10 during turning, and the like as a result of the operator operating for registering such information on the operation terminal 20. In the present embodiment, information about the spray device 14 is set as the information of the working machine.

In the setting process of the farm field information, the setting processing unit 211 sets information about the position and the shape of the farm field F, the work start position S to start the work and the work end position G to end the work (see FIG. 6), a working direction, and the like, as a result of the operator operating for registering such information on the operation terminal 20. The working direction means a direction in which the work vehicle 10 travels while performing the spraying work by the spray device 14 in the working area which is the area excluding the non-work region such as the headland from the farm field F.

It is possible to automatically obtain the information about the position and the shape of the farm field F when the operator manually causes the work vehicle 10 to encircle along the outer perimeter of the farm field F, for example, and a transition of the position information of the antenna 164 at that time is recorded. It is also possible to obtain the position and the shape of the farm field F, based on a polygon obtained by the operator operating the operation terminal 20 in a state where a map is displayed on the operation terminal 20 and designating a plurality of points on the map. A region designated by the obtained position and shape of the farm field F is a region (travel region) where the work vehicle 10 can travel.

In the setting process of the work information, as the work information, the setting processing unit 211 is configured to be set with a skipped number being the number of work routes to be skipped if the work vehicle 10 turns in the headland, a width of the headland, and the like.

The route generation processing unit 212 generates a target route R being a route on which the work vehicle 10 automatically travels, based on each of the setting information. The target route R is, for example, a route from the work start position S to the work end position G (see FIG. 6). The target route R illustrated in FIG. 6 includes a linear work route R1 for spraying the chemical liquid to the crop V in the region where the crop V is planted, and a movement route R2 for moving between the crop rows Vr without performing the spraying work.

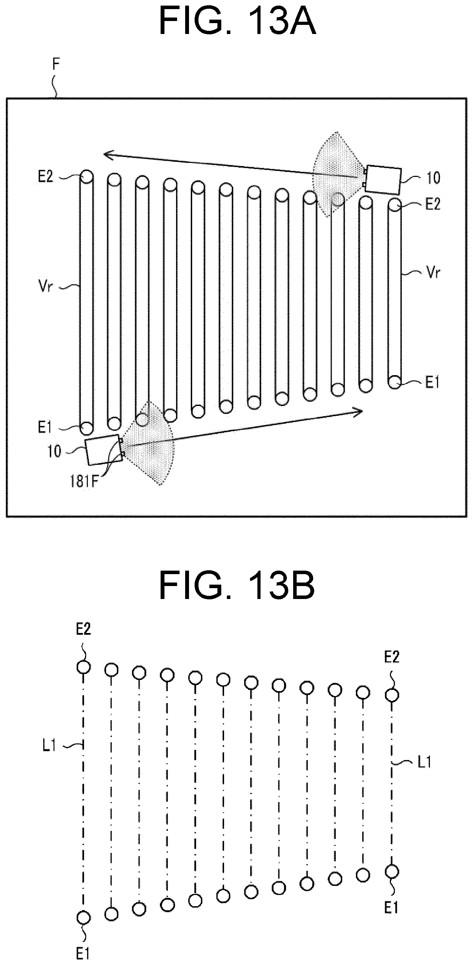

An example of a method of generating the target route R will be described with reference to FIGS. 13A and 13B. FIG. 13A schematically illustrates the crop rows Vr. Firstly, the operator manually causes the work vehicle 10 to travel along the outer perimeter of the crop rows Vr (see FIG. 13A). While traveling, the work vehicle 10 detects end points E1 on one side (lower side in FIG. 13A) and end points E2 on the other side (upper side in FIG. 13A) of the crop rows Vr, and acquires position information (coordinates) of each of the end points E1 and E2. The end points E1 and E2 may be positions of crops V that are already planted, or may be positions of target objects indicating positions of crops V that are to be planted. When acquiring the position information (coordinates) of each of the end points E1 and E2 from the work vehicle 10, the route generation processing unit 212 sets lines L1 (see FIG. 13B) connecting corresponding ones of the end points E1 and E2 as work routes of the crop rows Vr, to generate the target route R including a plurality of work routes and movement routes (turning routes). The method of generating the target route R is not limited to the method described above. The route generation processing unit 212 may store the generated target route R into the storage unit 22.

The output processing unit 213 outputs, to the work vehicle 10, route data including information about the target route R generated by the route generation processing unit 212. The output processing unit 213 may output the route data to a server (not illustrated). The server stores and manages a plurality of pieces of the route data acquired from each of the plurality of operation terminals 20 in association with the operation terminal 20 and the work vehicle 10.

In addition to the above-described processes, the control unit 21 executes a process for causing the operation display unit 23 to display various types of information. For example, the control unit 21 causes the operation display unit 23 to display a registration screen for registering work vehicle information, farm field information, work information, and the like, an operation screen for generating the target route R, an operation screen for causing the work vehicle 10 to start automatic travel, a display screen for displaying a travel state of the work vehicle 10, and the like.

Further, the control unit 21 receives various types of operations from the operator. Specifically, the control unit 21 receives a work start instruction from the operator to cause the work vehicle 10 to start a work, a travel stop instruction to stop the traveling of the work vehicle 10 traveling automatically, and the like. When the control unit 21 receives each of the instructions, the control unit 21 outputs each of the instructions to the work vehicle 10.

When the vehicle control device 11 of the work vehicle 10 acquires the work start instruction from the operation terminal 20, the vehicle control device 11 starts the automatic traveling and a spraying work of the work vehicle 10. When the vehicle control device 11 acquires the travel stop instruction from the operation terminal 20, the vehicle control device 11 stops the automatic traveling and spraying work of the work vehicle 10.

The operation terminal 20 may be accessible to the website (agricultural support site) of the agricultural support service provided by the server via the communication network N1. In this case, the operation terminal 20 is capable of functioning as an operation terminal of the server as a result of the browser program being executed by the control unit 21.

[Automatic Traveling Process]

An example of the automatic traveling process executed by the vehicle control device 11 of the work vehicle 10 will be described below with reference to FIG. 14.

The present invention may be regarded as an invention of an automatic traveling method in which one or more steps included in the automatic traveling process are executed. The one or more steps included in the automatic traveling process described herein may be omitted where appropriate. It is noted that the steps in the automatic traveling process may be executed in a different order as long as a similar operation and effect are obtained. Here, a case where each of the steps in the automatic traveling process is executed by the vehicle control device 11 is described by way of example, but another embodiment may be an automatic traveling method in which the steps in the automatic traveling process are executed in a distributed manner by one or more processors.

In step S1, the vehicle control device 11 determines whether a work start instruction is acquired from the operation terminal 20. For example, when an operator depresses a start button on the operation terminal 20, the operation terminal 20 outputs the work start instruction to the work vehicle 10. When the vehicle control device 11 acquires the work start instruction from the operation terminal 20 (S1: Yes), the process proceeds to step S2. The vehicle control device 11 waits until the work start instruction is acquired from the operation terminal 20 (S1: No).

In step S2, the vehicle control device 11 starts automatic travel. For example, when the vehicle control device 11 acquires the work start instruction from the operation terminal 20, detects the crops V, and estimates the crop row route R0, the vehicle control device 11 sets the travel mode to the crop row route travel mode M2. Subsequently, the vehicle control device 11 starts automatic travel along the crop row route R0, based on the positioning information (RTK positioning information) of the work vehicle 10. Further, the vehicle control device 11 causes the spray device 14 to start the spraying work for spraying a chemical liquid on the crop rows Vr.

Next, in step S3, the vehicle control device 11 determines whether the detection target is detected. Specifically, if at least any one of the LiDAR sensors 171L and 171R and the ultrasonic sensors 172F detects the detection target, the vehicle control device 11 determines that the detection target is detected. If the vehicle control device 11 determines that the detection target is detected (S3: Yes), the process proceeds to step S4. If the vehicle control device 11 determines that the detection target is not detected (S3: No), the process proceeds to step S12.

Subsequently, in step S4, the vehicle control device 11 acquires the coordinate position of the detection target. Specifically, the vehicle control device 11 acquires the first coordinate position representing the position of the detection target in a coordinate system having the obstacle detection device 17 as a reference.

For example, if the LiDAR sensors 171L and 171R detect the detection target, the vehicle control device 11 acquires, from the obstacle detection device 17, information about the coordinate position in the sensor coordinate system having the LiDAR sensors 171L and 171R as a reference (see FIG. 8A). For example, if the left and right ultrasonic sensors 172F detect the detection target, the vehicle control device 11 acquires, from the obstacle detection device 17, information about the coordinate position in the sensor coordinate system having each of the ultrasonic sensors 172F as a reference (see FIG. 8B).

Next, in step S5, the vehicle control device 11 converts the first coordinate position acquired from the obstacle detection device 17 into the second coordinate position representing the position of the detection target in the NED coordinate system having the farm field F as a reference. Specifically, the vehicle control device 11 converts, based on the attachment position of each sensor (the LiDAR sensors 171L and 171R, and the ultrasonic sensors 172F) and the coordinate position of the detection target detected by each sensor, the coordinate position of the detection target from the sensor coordinate system into a coordinate position in a vehicle coordinate system (see FIG. 8C). The vehicle control device 11 uses the current center position Pe of the work vehicle 10 in the NED coordinate system, the orientation angle of the work vehicle 10 in a previous coordinate conversion, and the current orientation angle of the work vehicle 10 to convert the coordinate position of the detection target detected by each sensor in the vehicle coordinate system into the NED coordinate system (see FIG. 8D).

Subsequently, in step S6, the vehicle control device 11 creates the obstacle map GM (see FIG. 9) for determining whether the detection target is an obstacle.

Next, in step S7, if the detection target is present at a position corresponding to each grid in the obstacle map GM, the vehicle control device 11 calculates the score (evaluation value) of the grid. Specifically, the vehicle control device 11 updates the score with different weights for each sensor (the LiDAR sensors 171L and 171R, and the ultrasonic sensors 172F) that detects the detection target in each grid in the obstacle map GM. The method for calculating the score is as described above.

Subsequently, in step S8, the vehicle control device 11 determines whether the calculated score is equal to or greater than a previously set threshold value. If the score is equal to or greater than the threshold value (S8: Yes), the process proceeds to step S9. On the other hand, if the score is less than the threshold value (S8: No), the process proceeds to step S81.

In step S9, the vehicle control device 11 determines that the detection target is an obstacle, and then, the process proceeds to step S10. On the other hand, in step S81, the vehicle control device 11 determines that the detection target is not an obstacle, and then, the process proceeds to step S12.

In step S10, the vehicle control device 11 determines whether the obstacle is included in the obstacle determination regions Ar1 to Ar5 set according to the travel region of the work vehicle 10. If the obstacle is included in the obstacle determination regions Ar1 to Ar5 (S10: Yes), the process proceeds to step S11. On the other hand, if the obstacle is not included in the obstacle determination regions Ar1 to Ar5 (S10: No), the process proceeds to step S12.

In step S11, the vehicle control device 11 executes the travel restriction process. For example, if the obstacle detected by the work vehicle 10 while traveling on the work route R1 is within the obstacle determination region Ar1 (see FIG. 12A), the vehicle control device 11 causes the work vehicle 10 to travel at a reduced speed. For example, if the obstacle detected by the work vehicle 10 while traveling on the work route R1 is within the obstacle determination region Ar2 (see FIG. 12B) or the obstacle determination region Ar3 (see FIG. 12C), the vehicle control device 11 causes the work vehicle 10 to stop. For example, if the obstacle detected by the work vehicle 10 while traveling in a headland region is within the obstacle determination region Ar4 (see FIG. 12D) or the obstacle determination region Ar5 (see FIG. 12E), the vehicle control device 11 causes the work vehicle 10 to stop.

In step S12, the vehicle control device 11 determines whether the work by the work vehicle 10 is completed.

The vehicle control device 11 determines that the work is completed if the position of the work vehicle 10 coincides with the work end position G (see FIG. 6). If the work vehicle 10 completes the work (S12: Yes), the automatic traveling process ends.

The vehicle control device 11 repeats the processes of steps S3 to S11 until the work vehicle 10 completes the work (S12: No). For example, if the vehicle control device 11 detects the detection target and determines that the detection target is not an obstacle (S81), the vehicle control device 11 continues automatic travel, without restricting the travel of the work vehicle 10 (travel at a reduced speed or stop traveling). As a result of detecting the detection target, even when the detection target is an obstacle, if the obstacle is not included in the obstacle determination regions Ar1 to Ar5 (S10: No), the vehicle control device 11 continues automatic travel, without restricting the travel of the work vehicle 10 (travel at a reduced speed or stop traveling). The vehicle control device 11 executes the processes of steps S3 to S11 every time the vehicle control device 11 detects a detection target until the work is completed.

As described above, the automatic traveling system 1 according to the present embodiment causes the work vehicle 10 to automatically travel according to the previously set target route R in the travel region (for example, the farm field F). The automatic traveling system 1 detects a detection target in the farm field F by a detection unit (the LiDAR sensors 171L and 171R, and the ultrasonic sensors 172F) provided in the work vehicle 10, and acquires a first coordinate position representing the position of the detection target in a first coordinate system (sensor coordinate system) having the detection unit as a reference. The automatic traveling system 1 converts the first coordinate position into a second coordinate position representing the position of the detection target in a second coordinate system (NED coordinate system) having the farm field F as a reference, and determines whether the detection target is an obstacle, based on the second coordinate position.

In the automatic traveling method according to the present embodiment, one or more processors execute causing the work vehicle 10 to automatically travel according to the previously set target route R in the travel region (the farm field F, for example), detecting a detection target in the farm field F by a detection unit (the LiDAR sensors 171L and 171R, and the ultrasonic sensors 172F) provided in the work vehicle 10, acquiring a first coordinate position representing a position of the detection target in a first coordinate system (sensor coordinate system) having the detection unit as a reference, converting the first coordinate position into a second coordinate position representing a position of the detection target in a second coordinate system (NED coordinate system) having the farm field F as a reference, and determining whether the detection target is an obstacle, based on the second coordinate position.

According to the configuration described above, it is possible to identify the position of the detection target detected by each sensor as a position with respect to the farm field F (global coordinates), so that it is possible to accurately determine whether the detection target is an obstacle. Therefore, it is possible to prevent erroneous recognition of the crops V as an obstacle when different crops V are detected a plurality of times due to a change in posture and the like of the work vehicle 10. Thus, it is possible to prevent a travel restriction of the work vehicle 10 due to erroneous recognition. As described above, it is possible to prevent an unnecessary travel restriction due to erroneous recognition of an obstacle, so that the work efficiency of the work vehicle 10 can be improved. As described above, according to the present invention, it is possible to improve the work efficiency of the work vehicle 10 by increasing the accuracy of determining an obstacle.

REFERENCE SIGNS LIST

1...Automatic traveling system
10...Work vehicle
11...Vehicle control device
111...Travel processing unit
112...Acquisition processing unit
113...Conversion processing unit
114...Determination processing unit
14...Spray device
16...Positioning device
17...Obstacle detection device
171L...LiDAR sensor (detection unit, first detection unit)
171R...LiDAR sensor (detection unit, first detection unit)
172F...Ultrasonic sensor (detection unit, second detection unit)
173F...Contact sensor (contact detection unit)
173R...Contact sensor (contact detection unit)
20...Operation terminal

211...Setting processing unit
212...Route generation processing unit
213...Output processing unit
40...Base station
50... Satellite
F...Field (travel region)
R...Target route
R0...Crop row route
V...Crop (work target)
Vr...Crop row
Pe...Current position (center position)
M1... Target route travel mode
M2...Crop row route travel mode
GM...Obstacle map (grid map)
Ar...Obstacle determination region (restricted travel region)
Ar1...Reduced-speed determination region (reduced-speed travel region)
Ar2 to Ar5...Travel-stopped determination region (travel-stopped region)

## Claims

1. An automatic traveling method comprising:

   causing a work vehicle to automatically travel according to a target route previously set in a travel region;
   detecting a detection target in the travel region by a detection unit provided in the work vehicle;
   acquiring a first coordinate position representing a position of the detection target in a first coordinate system having the detection unit as a reference;
   converting the first coordinate position into a second coordinate position representing a position of the detection target in a second coordinate system having the travel region as a reference; and
   determining whether the detection target is an obstacle, based on the second coordinate position.

2. The automatic traveling method according to claim 1, wherein if the detection target is determined to be an obstacle, the work vehicle is caused to stop or to travel at a reduced speed.

3. The automatic traveling method according to claim 1 or 2, wherein if the second coordinate position is included in a restricted travel region set in a predetermined range from the work vehicle, the detection target is determined to be an obstacle.

4. The automatic traveling method according to claim 3, wherein the restricted travel region includes a reduced-speed travel region and a travel-stopped region,

   if the second coordinate position is included in the reduced-speed travel region, the detection target is determined to be an obstacle and the work vehicle is caused to travel at a reduced speed, and
   if the second coordinate position is included in the travel-stopped region, the detection target is determined to be an obstacle and the work vehicle is caused to stop.

5. The automatic traveling method according to any one of claims 1 to 4, wherein the detection unit includes a first detection unit that detects a position of the detection target and a second detection unit that detects a distance to the detection target, and
   it is determined whether the detection target is an obstacle, based on the second coordinate position of the detection target detected based on a detection result of the first detection unit, and the second coordinate position of the detection target detected based on a detection result of the second detection unit.

6. The automatic traveling method according to claim 5, wherein it is determined whether the detection target is an obstacle, based on a first evaluation value corresponding to the number of times the second coordinate position of the detection target detected based on the detection result of the first detection unit is detected, and a second evaluation value corresponding to the number of times the second coordinate position of the detection target detected based on the detection result of the second detection unit is detected.

7. The automatic traveling method according to claim 6, wherein a weight of the second evaluation value in a determination process for determining whether the detection target is an obstacle is smaller than a weight of the first evaluation value.

8. The automatic traveling method according to claim 7, wherein if a total value of the first evaluation value and the second evaluation value is equal to or greater than a previously set threshold value, the detection target is determined to be an obstacle.

9. The automatic traveling method according to any one of claims 5 to 8, wherein the work vehicle is caused to travel automatically along a route set in accordance with the position of the detection target detected by the first detection unit.

10. The automatic traveling method according to any one of claims 1 to 9, wherein the detection target not detected by the detection unit in a range from a ground of the travel region to a predetermined height and detected by the detection unit in a predetermined range above the predetermined height, is not determined to be an obstacle.

11. The automatic traveling method according to any one of claims 1 to 10, wherein if a contact detection unit provided in the work vehicle detects a contact with the work vehicle, the work vehicle is caused to stop, regardless of whether the detection target is an obstacle.

12. An automatic traveling system, comprising:

a travel processing unit that causes a work vehicle to automatically travel according to a target route previously set in a travel region;
a detection processing unit that detects a detection target in the travel region by a detection unit provided in the work vehicle;
an acquisition processing unit that acquires a first coordinate position representing a position of the detection target in a first coordinate system having the detection unit as a reference;
a conversion processing unit that converts the first coordinate position into a second coordinate position representing a position of the detection target in a second coordinate system having the travel region as a reference; and
a determination processing unit that determines whether the detection target is an obstacle, based on the second coordinate position.

13. An automatic traveling program for causing one or more processors to execute:

causing a work vehicle to automatically travel according to a target route previously set in a travel region;
detecting a detection target in the travel region by a detection unit provided in the work vehicle;
acquiring a first coordinate position representing a position of the detection target in a first coordinate system having the detection unit as a reference;
converting the first coordinate position into a second coordinate position representing a position of the detection target in a second coordinate system having the travel region as a reference; and
determining whether the detection target is an obstacle, based on the second coordinate position.

# FIG. 1

# FIG. 2

1

**20** — OPERATION TERMINAL

**21** — CONTROL UNIT

**211** — SETTING PROCESSING UNIT

**212** — ROUTE GENERATION PROCESSING UNIT

**213** — OUTPUT PROCESSING UNIT

**22** — STORAGE UNIT

**23** — OPERATION DISPLAY UNIT

**24** — COMMUNICATION UNIT

**N1** —

**10** — WORK VEHICLE

**11** — VEHICLE CONTROL DEVICE

**111** — TRAVEL PROCESSING UNIT

**112** — ACQUISITION PROCESSING UNIT

**113** — CONVERSION PROCESSING UNIT

**114** — DETERMINATION PROCESSING UNIT

**12** — STORAGE UNIT

**13** — TRAVEL DEVICE

**14** — SPRAY DEVICE

**15** — COMMUNICATION UNIT

**16** — POSITIONING DEVICE

**161** — POSITIONING CONTROL UNIT

**162** — STORAGE UNIT

**163** — COMMUNICATION UNIT

**164** — ANTENNA

**17** — OBSTACLE DETECTION DEVICE

# FIG. 3

UP
RIGHT
REAR
FRONT
LEFT
DOWN

10

102
100C
164
171R
164
171L
100
100R
100L
14
172F
172F
173F
172F
173F
101
101

# FIG. 4A

FRONT ⟵⟶ REAR

# FIG. 4B

REAR ⟵⟶ FRONT

# FIG. 4C

# FIG. 5

# FIG. 6

# FIG. 7

# FIG. 8A

Yrl   Yrr

171L   Xrl   Xrr

171R

10

# FIG. 8B

Ysl   Ysr

172F   Xsl   Xsr

172F

10

# FIG. 8C

Yrs

10

Xrs

Pe

# FIG. 8D

# FIG. 9

# FIG. 10

INPUT     KERNEL     OUTPUT

# FIG. 11

# FIG. 12A

GM

P0

Ar1

Ar1

Pe

# FIG. 12B

GM

P0

Ar2

Ar2

Pe

# FIG. 12C

GM

P0

Ar3 — · — · — · — · — · — · — · — · — Ar3

Pe

# FIG. 12D

GM

P0

Ar4 · · · · · · · · · · · · · · · · · · · · Ar4

Pe

# FIG. 12E

# FIG. 13A

# FIG. 13B

# FIG. 14

```
                    ( START )
                        │
                        ▼
No ◄──────◄ S1  IS WORK START
          │    INSTRUCTION ACQUIRED?
          │         │
          │       Yes
          │         ▼
          │   S2  START AUTOMATIC TRAVEL
          │         │
          │         ▼
          │   S3  IS DETECTION TARGET ──── No ──┐
          │       DETECTED?                      │
          │         │                            │
          │       Yes                            │
          │         ▼                            │
          │   S4  ACQUIRE COORDINATE POSITION    │
          │         │                            │
          │         ▼                            │
          │   S5  CONVERT COORDINATE POSITION    │
          │       INTO NED COORDINATE SYSTEM     │
          │         │                            │
          │         ▼                            │
          │   S6  CREATE OBSTACLE MAP            │
          │         │                            │
          │         ▼                            │
          │   S7  CALCULATE GRID SCORE           │
          │         │                            │
          │         ▼                            │
          │   S8  IS GRID SCORE EQUAL TO OR ── No ──┐
          │       GREATER THAN THRESHOLD VALUE?      │
          │         │                            │   │
          │       Yes                            │   ▼
          │         ▼                            │  S81 DETERMINE AS NOT
          │   S9  DETERMINE AS OBSTACLE          │  BEING OBSTACLE
          │         │                            │   │
          │         ▼                            │   │
          │   S10 IS OBSTACLE WITHIN ── No ──┐   │   │
          │       RESTRICTED TRAVEL REGION?  │   │   │
          │         │                        │   │   │
          │       Yes                        │   │   │
          │         ▼                        │   │   │
          │   S11 EXECUTE TRAVEL             │   │   │
          │       RESTRICTION PROCESS        │   │   │
          │         │                        │   │   │
          │         ▼◄───────────────────────┴───┴───┘
No ◄──────│   S12 IS WORK ENDED?
          │         │
                  Yes
                    ▼
                 ( END )
```

Europäisches
Patentamt

European
Patent Office

Office européen
des brevets

# EUROPEAN SEARCH REPORT

**Application Number**

**EP 22 17 4761**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/190050 A2 (JAYBRIDGE ROBOTICS INC [US]) 27 November 2014 (2014-11-27) * paragraphs [0003], [0004], [0017], [0018], [0019], [0020], [0021], [0023], [0027] * * figures 1-6C * ----- | 1-13 | INV. G05D1/02 |

**TECHNICAL FIELDS SEARCHED (IPC)**

G05D

The present search report has been drawn up for all claims

| Place of search | Date of completion of the search | Examiner |
|---|---|---|
| Munich | 7 November 2022 | Pöllmann, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 4761

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2022

| Patent document cited in search report | | Publication date | Patent family member(s) | | Publication date |
|---|---|---|---|---|---|
| WO 2014190050 | A2 | 27-11-2014 | US | 2014350835 A1 | 27-11-2014 |
| | | | WO | 2014190050 A2 | 27-11-2014 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021000021 A